# EUROPEAN PATENT SPECIFICATION

(11) **EP 0 779 249 B1**
(45) Date of publication and mention of the grant of the patent: **22.08.2001**
(21) Application number: 96119889.2
(22) Date of filing: 11.12.1996
(51) Int. Cl.: C03B 9/453

(54) **Actuating assembly for moving glass articles**
Vorrichtung zum Wegschieben von Glasgegenstäden
Dispositif pour dégager des articles en verre

(30) Priority: 12.12.1995 IT TO950996
(43) Date of publication of application: 18.06.1997
(73) Proprietor: BOTTERO S.p.A., 12010 Cuneo (IT)
(72) Inventor: Basso, Gianpiero, 12081 Beinette (IT); Giraudo, Vittore, 12100 Cuneo (IT); Simondi, Carlo, 12100 Cuneo (IT)
(74) Representative: Jorio, Paolo, Dr. Ing.

(56) References cited:
- DE-B- 2 746 675
- US-A- 3 559 537
- US-A- 5 160 015

## Description

The present invention relates to an actuating assembly for moving glass articles, in particular, hollow glass articles, to which the following description refers purely by way of example.

On hollow glassware manufacturing systems, the articles are formed inside respective aligned, adjacent molds, and are removed from the molds and deposited on to respective supporting surfaces on which they remain for a given length of time before being transferred on to a linear conveyor by which they are fed successively to the output of the system.

Each article is transferred from the supporting surface to the linear conveyor by means of a respective actuating assembly, which comprises a gripping member for positively engaging at least one article for transfer; a pneumatic linear actuator for moving the gripping member to and from the article for transfer; and an angular actuator for rotating the linear actuator, and hence the gripping member, about a rotation axis and between two angular limit positions.

The linear actuator is connected to a compressed air source by means of a pneumatic circuit comprising a distribution device for supplying compressed air to the linear actuator regardless of the angular position of the linear actuator about the rotation axis.

More specifically, the compressed air distribution device comprises a distribution plate on which are formed two cavities communicating with the compressed air source and closed by a movable rotary plate facing the distribution plate to define respective separate intermediate air chambers. The movable plate is fitted integrally with the linear actuator, the variable-volume chambers of which are each connected to a respective intermediate chamber by a respective conduit formed through the movable plate.

Known actuating assemblies also comprise a pair of fixed mechanical limit stops, which, in use, arrest rotation of the movable plate, and hence of the gripping member, in two angular limit positions: a pickup position in which the article is removed off the supporting surface; and a release position in which the article is deposited on to the linear conveyor.

Though widely used, known actuating assemblies of the above type present the major drawback of being dedicated or fixed-configuration assemblies. That is, each assembly is constructed as a function of the characteristics of the system to which it is eventually fitted, and more specifically as a function of the precise location of the assembly in relation to the respective supporting surface, the length of the path along which the articles are to be fed, and the rotation direction (clockwise or anticlockwise) of the gripping member to feed the article along the path.

The rotation direction of the gripping member and the length of the path, in fact, determine the size and location of the intermediate chambers partly defined by the distribution plate, as well as the location of the mechanical limit stops.

As a result, appropriately marked "right-hand" or "left-hand" actuating assemblies are formed, each of which, in use, transfers the articles from the respective supporting surface to the conveyor by rotating the gripping member clockwise or anticlockwise only, and only by a given predetermined angle.

Constructing the actuating assemblies as a function of a specific application therefore means that the exact configuration of the system must be known beforehand, and poses serious organization problems both for the maker and the user of the assemblies.

In fact, to ensure immediate supply or replacement of the actuating assemblies, the supplier and/or user must store two different types of assembly ("right-hand" and "left-hand"), which, within the store, must obviously be kept separate or at any rate be so marked as to distinguish one from the other.

Known actuating assemblies of the above type also fail to provide for fast, troublefree, and hence low-cost, routine production change setup to adapt the assembly to articles of different shapes and sizes.

This is mainly due to the fact that known assemblies normally are set up by trial and error, and involve disconnection of the linear actuator from the respective pneumatic circuit and possibly also from a cooling circuit, and removal of the entire assembly from the respective seat to adjust the position of appropriate locators housed inside the seat.

It is an object of the present invention to provide a low-cost and variable configuration actuating assembly, which enables to change, in a simple and quick manner, at least the rotation direction of the gripping member for feeding glass articles.

According to the present invention, there is provided an actuating assembly for moving glass articles, the assembly comprising a gripping member for positively engaging an article for transfer; a pneumatic actuator for moving the gripping member, in use, to and from the article; and an angular actuator for rotating the pneumatic actuator about a rotation axis; circuit means being provided for connecting said pneumatic actuator to a source of compressed air regardless of the position of the pneumatic actuator about said rotation axis; characterized in that said circuit means comprise two pairs of passages for the compressed air; first selecting means for selectively connecting said two pairs of passages to said source of compressed air; and second selecting means for selectively connecting said two pairs of passages to the pneumatic actuator.

Further drawbacks of the prior art actuating assembly discussed above are overcome by preferred embodiments of the invention.

A non-limiting embodiment of the present invention will be described by way of example with reference to the accompanying drawings, in which:
Figure 1 shows a partial section, with parts removed for clarity and one part shown in detail, of a preferred embodiment of the actuating assembly according to the present invention;
Figure 2 shows a section along line II-II in Figure 1;
Figure 3 shows a section along line III-III in Figure 1;
Figure 4 shows a section along line IV-IV in Figure 1;
Figure 5 shows a section along line V-V in Figure 1;
Figures 6, 7, 8 show the same views as in Figures 3, 4, 5 respectively, but with a different arrangement of a number of the components in Figures 3, 4, 5;
Figure 9 shows a larger-scale view of two details in Figures 3 and 6;
Figure 10 shows a section along line X-X in Figure 9;
Figure 11 shows a larger-scale section, with parts removed for clarity, along line XI-XI in Figure 4;
Figures 12 and 13 show larger-scale sections, with parts removed for clarity, along lines XII-XII and XIII-XIII in Figure 4;
Figures 14 and 15 show respective larger-scale sections of a Figure 1 detail in the operating position and as disassembled;
Figure 16 shows a larger-scale section of a further detail in Figure 1;
Figure 17 shows a section along line XVII-XVII in Figure 16;
Figure 18 shows a section, with parts removed for clarity, along line XVIII-XVIII in Figure 1;
Figure 19 shows a partially sectioned side view of a further detail in Figure 1;
Figure 20 shows a partial view in the direction of arrow A in Figure 19;
Figure 21 shows a schematic view of a control unit for controlling an electric motor of the Figure 1 assembly.

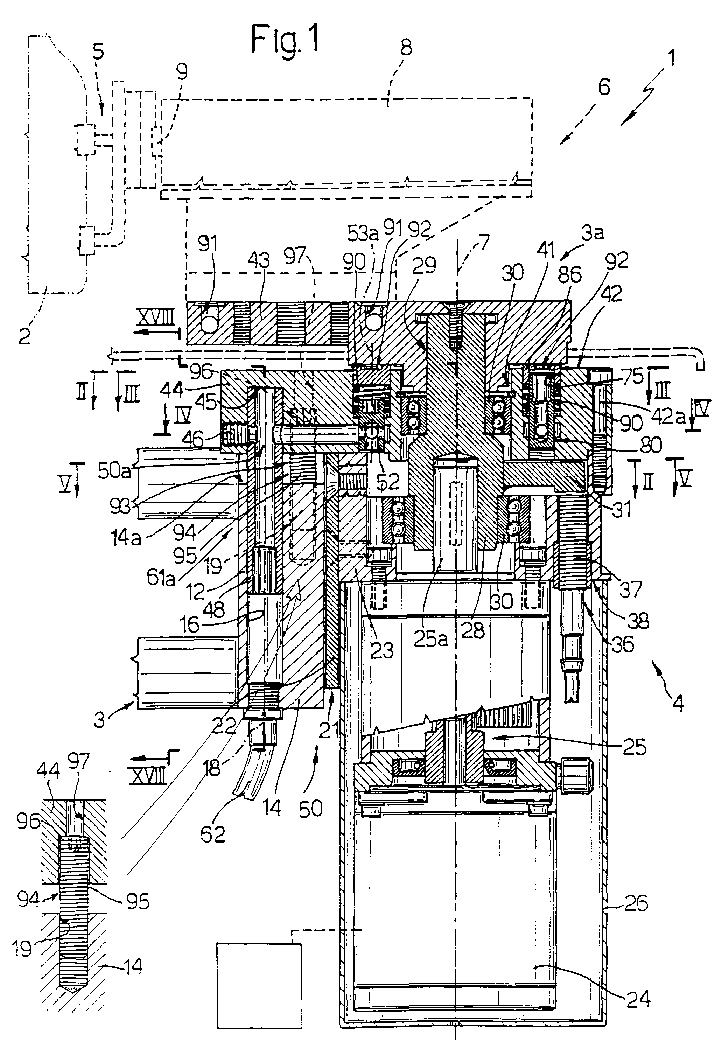

Number 1 in Figure 1 indicates an actuating assembly for transferring hollow glass articles 2, in this case bottles, from a supporting surface (not shown), located adjacent to a finishing mold, on to a linear conveyor (not shown) for conveying articles 2.

Assembly 1 comprises a frame 3 fittable integrally to a fixed body (not shown) and supporting an actuating device 3a for activating a known gripping member 5 (not described in detail) for positively engaging article 2 for transfer. Device 3a comprises a known electric angular actuator 4, and a pneumatic linear actuator 6. Linear actuator 6 is connected to and rotated by angular actuator 4 about a substantially vertical rotation axis 7 between a pickup and a release position wherein article 2 is respectively picked up and released, and comprises a body 8, and an output rod 9 to which gripping member 5 is connected integrally.

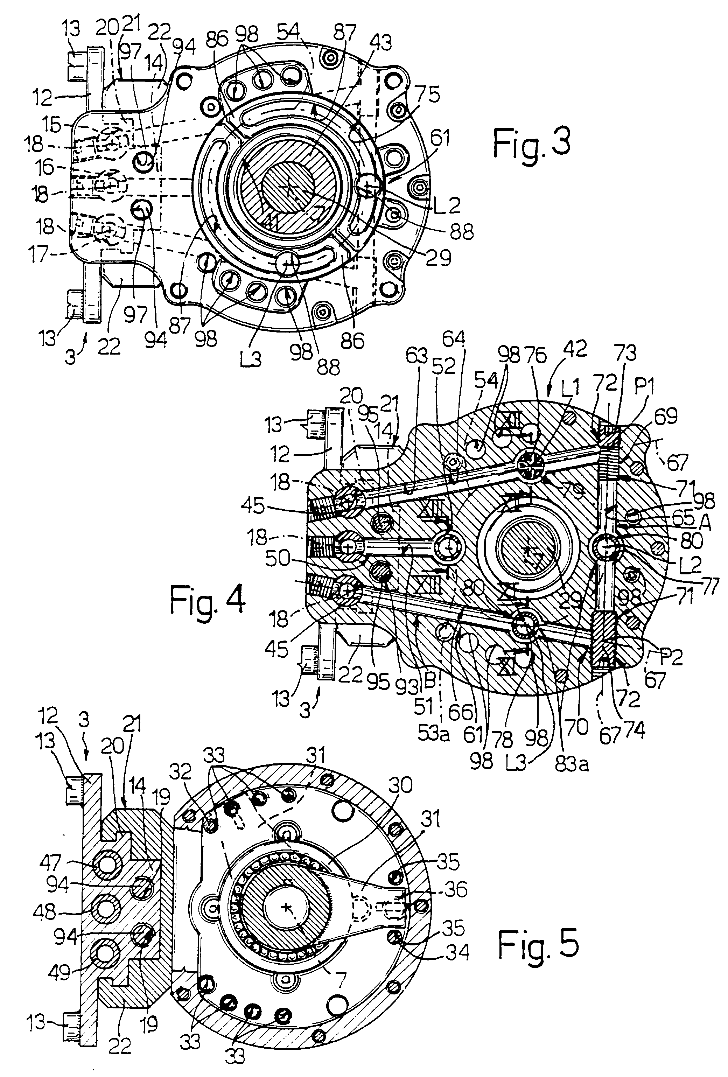

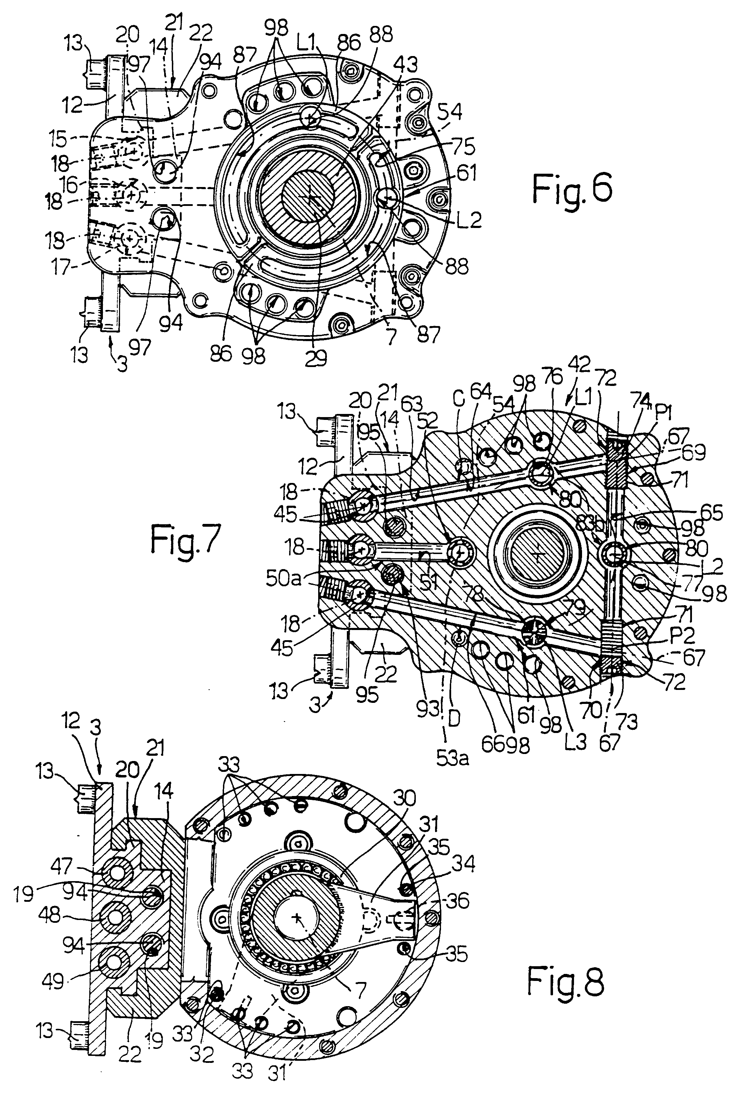

As shown in Figure 1, and particularly in Figures 5, 8 and 18, frame 3 comprises a plate 12 to which are connected integrally the ends of four arms 13, the opposite ends of which are connected integrally, in use, to said fixed body (not shown). Plate 12 comprises an integral elongated intermediate body 14 extending on the opposite side of plate 12 to arms 13, and defined, on the side facing pneumatic actuator 6, by a flat surface 14a perpendicular to axis 7. Body 14 comprises three vertical through holes 15, 16, 17 having respective threaded bottom end portions and respective axes 18 parallel to one another and to axis 7; a further two threaded holes 19 (Figures 5 and 8) parallel to axis 7 and formed on the opposite side of holes 15, 16, 17 to plate 12; and a pair of opposite appendixes 20 extending parallel to plate 12 and forming a guide, parallel to axis 7, of a guide-slide assembly 21. Assembly 21 also comprises a C-shaped slide 22 connected positively and in axially-sliding manner to appendixes 20, and connected integrally to a rigid structure 23 of angular actuator 4 by means of a number of screws (Figure 1).

Angular actuator 4 comprises an electric step motor 24 connected to structure 23 and coaxial with axis 7; and a known speed reducer 25 (shown partially in Figure 1) connected to the shaft of motor 24, and having a respective output shaft 25a extending upwards and coaxial with axis 7. Motor 24 and reducer 25 are housed inside a cup-shaped casing 26 comprising an open top end portion, which is connected to an intermediate portion of structure 23 by means of a number of known elastic toggle devices 27 defining an assembly for fast-fit connecting casing 26 to rigid structure 23.

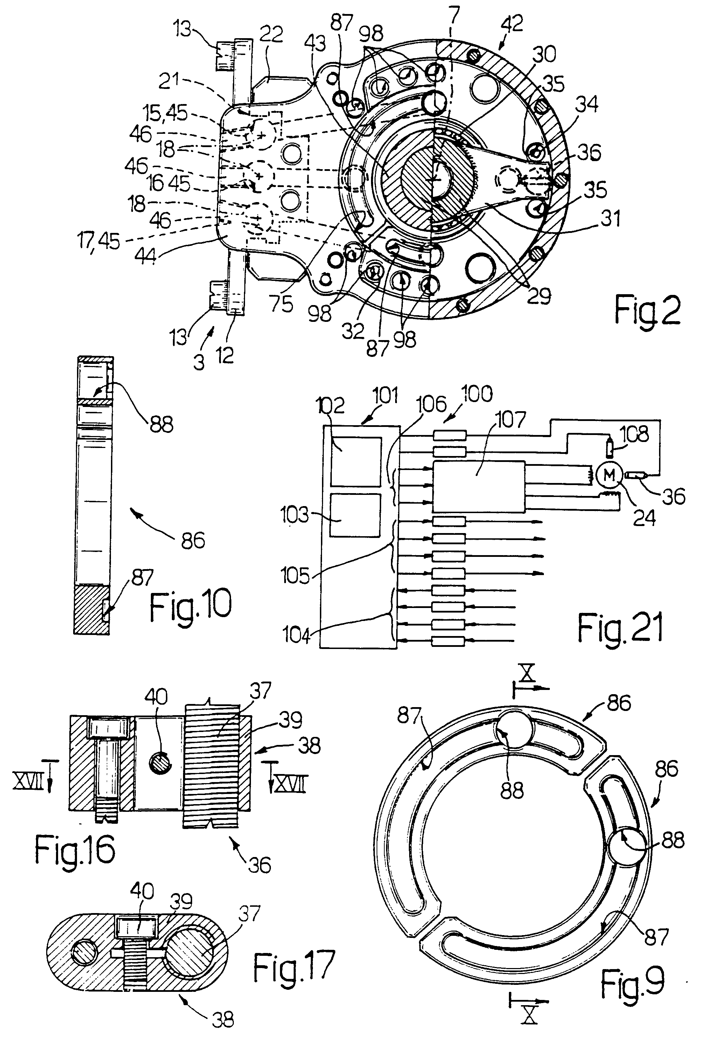

Shaft 25a of reducer 25 is fitted with a bottom end portion 28 of a transmission member 29 connected to rigid structure 23 in axially-fixed manner and so as to rotate about axis 7 by means of a pair of bearings 30. Bottom portion 28 is fitted integrally with one end of an arm 31 projecting perpendicularly to axis 7, and which is rotated by motor 24 between two angular limit positions: a lateral limit position (shown by the dotted line in Figures 5 and 8) corresponding to the release position of member 5, and wherein arm 31 rests against a mechanical limit stop defined by a threaded pin 32 having a seat for an Allen wrench and screwed inside one of four threaded holes 33 formed in structure 23; and a central limit position (shown by the continuous line in Figures 2, 5 and 8) corresponding to the pickup position of member 5, and wherein arm 31 rests against a further mechanical limit stop defined by a further threaded pin 34, similar to pin 32, screwed inside one of two threaded holes 35 formed in structure 23, and extends over a presence sensor 36. Sensor 36 comprises an externally-threaded end portion 37, and extends loosely inside a vertical through hole formed in structure 23, and into casing 26. Sensor 36 is connected adjustably to structure 23 by means of a retaining member 38 connected integrally to structure 23 by means of screws, and which comprises an elastic portion 39 having a threaded hole engaged by said threaded portion 37, and a screw 40 extending crosswise to the threaded hole and for elastically deforming portion 39 to clamp sensor 36 inside the threaded hole.

As shown in Figure 1, transmission member 29 extends upwards through an opening 41 formed in a distribution plate 42 connected to structure 23 by means of a number of screws 42a (only one shown in Figure 1), and comprises a top end portion connected integrally to a movable plate 43 supporting linear actuator 6.

Plate 42 extends crosswise to axis 7, and comprises an end portion 44 located over body 14 of frame 3 and in turn comprising three dead holes 45 (only one shown in Figure 1) coaxial with, and having respective inlets communicating with, respective holes 15, 16, 17. An end portion of a respective tubular sleeve 47, 48, 49 (Figures 1, 8, 18) is housed inside each dead hole 45 and locked in position coaxial with respective axis 18 by a respective pin 46, and an opposite end portion of respective tubular sleeve 47, 48, 49 engages an end portion of respective hole 15, 16, 17 in axially-sliding, fluidtight manner.

In the embodiment shown, sleeves 47, 48, 49 and respective holes 15, 16, 17, together with guide-slide assembly 21, form a device 50 for connecting actuating device 3a to frame 3. According to a variation (not shown), device 50 has no guide-slide assembly 21, and only comprises sleeves 47, 48, 49 connected telescopically to respective holes 15, 16, 17.

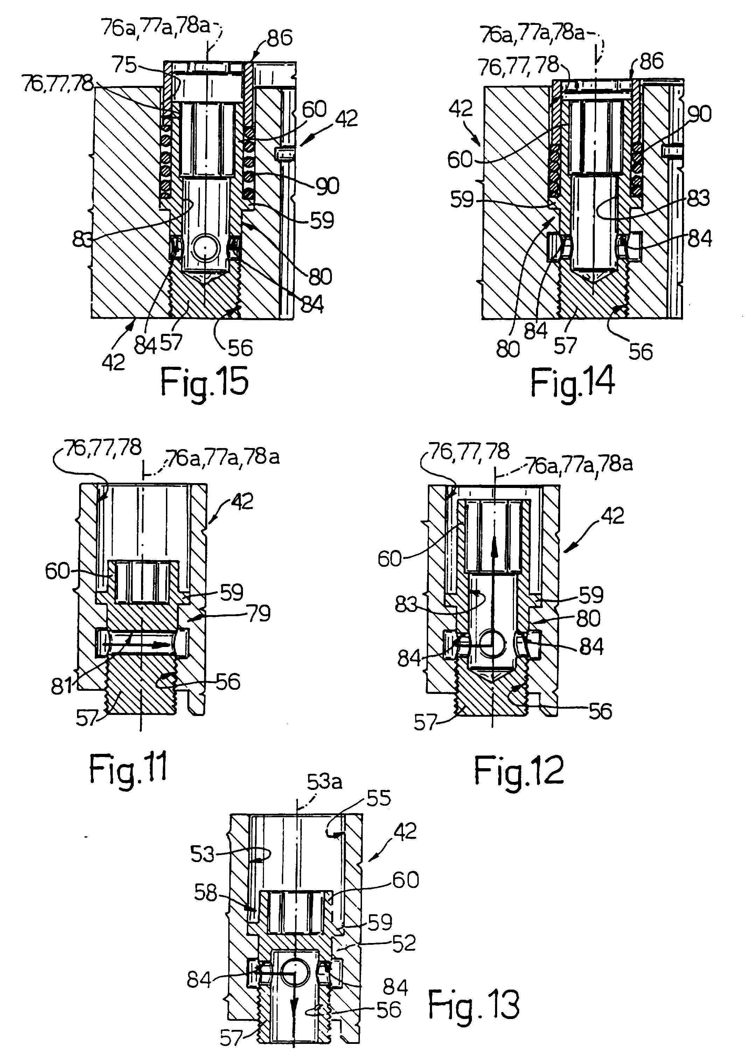

In addition to forming part of device 50, sleeve 48 also forms part of an air cooling circuit 50a, which, as shown, particularly in Figures 4 and 7, also comprises a conduit 51 formed in plate 42 and communicating, at one end, with hole 16 through an opening formed in the lateral wall of the portion of sleeve 48, and, at the other end, with the inside of structure 23 and casing 26 through a curved passage defined by a screw element 52 (Figures 1 and 13). Element 52 is housed inside a cylindrical through seat 53 formed in plate 42 in such a position that a respective axis 53a (Figures 1 and 13) extends parallel to axis 7 and intersects a circumference 54 coaxial with axis 7 (Figures 3, 4, 6, 7). More specifically, and as shown in Figure 13, seat 53 comprises an open-topped cavity 55, and a threaded through hole 56 extending from the bottom wall of cavity 55; hole 56 is engaged by a threaded shank 57 of element 52; and a socket head 58 of element 52 extends inside cavity 55, and comprises a radial outer flange 59 resting on the bottom wall of cavity 55, and an end portion 60 extending upwards with ample radial clearance inside cavity 55 and having a socket for an Allen wrench.

In addition to forming part of device 50, sleeves 47, 49 and respective holes 15, 17 also form part of an adaptable pneumatic circuit 61 for supplying and distributing compressed air to linear actuator 6, and, together with sleeve 48 and respective hole 16, a fast-fit connecting device 61a for simultaneously connecting, in one operation, both linear actuator 6 to its compressed air source, and the whole of device 3a to a cooling fluid circulating unit (not shown), simultaneously with connection of device 3a to frame 3.

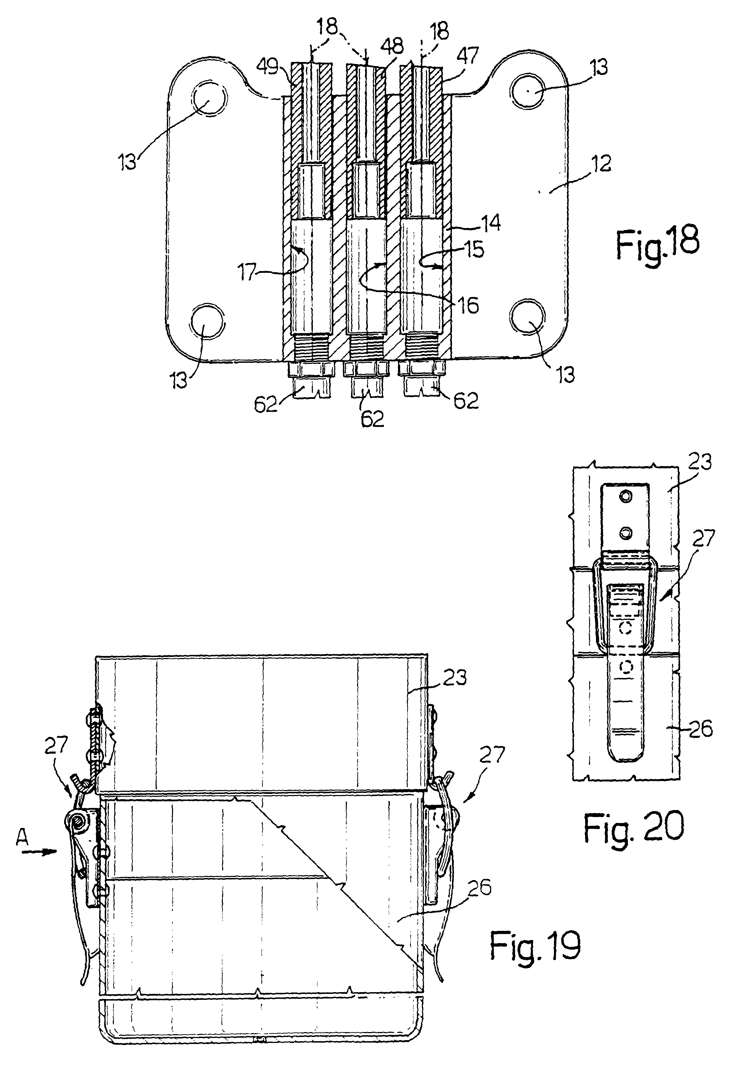

More specifically, in addition to sleeves 47 and 49, pneumatic circuit 61 also comprises two conduits 62 (Figure 18) connected at one end to the compressed air source in known manner, and the respective end portions of which are defined by holes 15 and 17. Circuit 61 also comprises a conduit 63 formed inside plate 42 and in turn comprising three straight portions 64, 65, 66, the respective axes 67 of which extend perpendicularly to axis 7, intersect one another at two points P1, P2, and intersect said circumference at three points L1, L2, L3. More specifically, portions 64 and 66 communicate, at one end, with the inside of respective sleeves 47 and 49 through respective openings formed in the lateral walls of respective sleeves 47, 49, and, at the other end, with respective internally-threaded end portions 69 and 70 of portion 65; and threaded portions 69 and 70 comprise respective inner portions 71 extending between points of intersection P1 and P2, and respective outer portions 72 extending outwards of points P1 and P2 and communicating with the outside. As shown in Figures 4 and 7, threaded portions 69 and 70 are engaged by one or the other of two threaded pins 73 and 74, which have different axial lengths and, as described more clearly later on, are fitted to one or the other of threaded portions 69 and 70 to form assemblies 1 of different characteristics.

As shown in Figures 2, 3 and 6, circuit 61 also comprises a substantially annular cavity 75 formed in the surface of plate 42 facing movable plate 43 and substantially along said circumference 54; cavity 75 is defined by an annular bottom wall in which are formed three seats 76, 77, 78 of the same shape and size as seat 53, and which have respective axes 76a, 77a, 78a extending through respective points L1, L2, L3, and communicate with respective portions 64, 65, 66; seats 76 and 78 house respective screw type compressed air supply elements, which, as described more clearly later on, are selectable from two distribution elements 79 and 80 (Figures 4 and 7) similar to element 52 and shown in Figures 11 and 12; while seat 77 permanently houses element 80.

More specifically, and as shown in Figure 11, element 79 differs from element 52 in that threaded shank 57 is a solid shank, and comprises a through hole 81 perpendicular to the axis of shank 57 and for ensuring the continuity of portion 64, 66 through which seat 76, 78 is formed.

As shown in Figure 12, on the other hand, element 80 differs from element 52 by comprising a dead hole 83 coaxial with the axis of element 80 and extending through head 60 and partly inside shank 57; shank 57 comprises four lateral passages 84 by which the inside of dead hole 83 communicates with respective conduit portion 64, 66; and the axial length of head 60 is greater than that of head 60 of element 52.

As shown in Figures 3 and 6, annular cavity 75 houses, coaxially with axis 7, two half-rings 86 (Figure 9), each of which has the same curvature as circumference 54 and comprises a respective circumferential face groove 87 formed in the surface of the respective half-ring facing movable plate 43. Half-rings 86 also comprise respective through holes 88 formed along respective grooves 87 and so located that their respective axes extend through points L1 and L2 as shown in Figure 6, or through points L2 and L3 as shown in Figure 3.

As shown in Figures 1, 14 and 15, head 60 of each element 52, 79, 80 is fitted with a respective coil spring 90 extending between flange 59 of the respective distribution element and a respective half-ring 86. Half-ring 86 is movable between a raised assembly position (Figure 15) and a lowered operating position (Figure 14) in which each half-ring 86 is pushed by respective spring 90 into sliding and fluidtight contact with movable plate 43, and defines, together with movable plate 43, a respective chamber 92 (Figure 1).

Each chamber 92 communicates with one end (not shown) of a respective supply conduit 91 (Figure 1) formed in movable plate 43, and the opposite end of which communicates with a respective chamber (not shown) of linear actuator 6.

As shown in Figures 1 to 8, assembly 1 also comprises a screw-nut screw actuating device 93, which is operated externally to adjust the position of actuating device 3a, and hence gripping member 5, in a direction parallel to axis 7, and to disconnect device 3a from fixed supporting frame 3. More specifically, for each threaded hole 19, which forms part of device 93, device 93 comprises a socket-head screw 94 having a respective threaded shank 95 engaging respective hole 19; and an end portion or head 96, which engages in axially-sliding manner a cylindrical seat formed in portion 44 of fixed plate 42. More specifically, each cylindrical seat comprises an end wall defining an axial shoulder for head 96 of respective screw 94, and communicating externally through an opening 97 formed in fixed plate 42 and for enabling screw 94 to be operated from the outside.

As shown in Figures 2, 3, 4, 6 and 7, fixed plate 42 also comprises a number of further openings 98, each of which, when arm 31 is set to the central position, extends coaxially with a respective threaded hole 33, 35 to enable pins 32, 34 to be moved externally from one threaded hole 33, 35 to the other.

Assembly 1 also comprises a known electronic control unit 100, which, as shown particularly in Figure 21, comprises a known microcontroller 101 in turn comprising a memory block 102 for storing both the program and operating data, and a processing block 103. Microcontroller 101 comprises a number of inputs 104 for entering external drive data, e.g. an external start pulse, a manual start pulse, a stop signal, and possibly a signal for expelling article 2; and a number of outputs 105, 106, of which outputs 106 are those of processing block 103 by which to emit signals for controlling, for example, an electrovalve (if any) of pneumatic circuit 61, cooling of article 2 for transfer, and possibly an expelling device (not shown) for expelling article 2.

Unit 100 also comprises a power module 107, preferably a bipolar chopper guide module, for controlling motor 24, and which is connected to and supplied by outputs 106 of processing block 103 with the processed control signals; a known sensor 108 for detecting the presence of gripping member 5 in the article 2 pickup position; and sensor 36 for detecting the presence of gripping member 5 in the article 2 release position. According to the program and the data stored in memory block 102, processing block 103 calculates in known manner the motion profile to be followed by motor 24 to move gripping member 5 between the article 2 pickup and release positions, and controls power block 107 to drive motor 24 accordingly. The control signals from processing block 103 are synchronized with the external signals supplied to microcontroller 101 by inputs 104.

At the assembly stage, the various components of assembly 1 may be assembled, as required, to form left-hand actuating assemblies (Figures 2, 6, 7 and 8) in which gripping member 5 rotates clockwise (in Figure 8) into the release position, or right-hand actuating assemblies (Figures 3, 4 and 5) in which gripping member 5 rotates anticlockwise (in Figure 5) into the release position.

More specifically, and as shown in Figures 3 to 5, to form a right-hand actuating assembly, screw elements 79 and 80 are inserted respectively inside seats 76 and 78; the axes of holes 88 of respective half-rings 86 are aligned with respective points L2 and L3; and pins 73 and 74 are fitted respectively to portion 72 of portion 69 and to portion 71 of portion 70. Conduit 63 is thus divided into two separate branches A and B, which, on the one hand, communicate with the inside of respective sleeves 47 and 49, and, on the other, communicate with respective chambers 92 via respective elements 80 housed inside seats 77 and 78, and, consequently, with a respective chamber (not shown) of linear actuator 6 via respective conduit 91. In which case, element 79 inside seat 76 ensures the continuity of portion 64 to prevent any air leakage, while holes 83 of the two elements 80 define a pair of compressed air passages or inlet/outlet ports 83a.

Conversely, and as shown in Figures 6 to 8, to form a left-hand actuating assembly, element 80 is left inside seat 77; elements 79 and 80 are inserted respectively inside seats 78 and 76; half-rings 86 are so positioned that the axes of holes 88 are aligned with points L1 and L2; and pins 73 and 74 are fitted respectively to portion 72 of portion 70 and to portion 71 of portion 69. Conduit 63 is thus divided into two separate branches C and D, which, on the one hand, communicate with the inside of respective sleeves 47 and 49, and, on the other, communicate with respective chamber 92, but this time via elements 80 inside seats 76 and 77. In this case, in fact, element 79 inside seat 78 ensures the continuity of portion 66 to prevent any air leakage, while holes 83 of elements 80 define another pair of compressed air passages or inlet/outlet ports 83b.

Assembly 1 as described is therefore an adaptable modular assembly, i.e. enabling, at the assembly stage, the formation of a "right-hand" or "left-hand" actuating assembly using the same components but simply arranged differently, and may therefore be produced independently of its application, i.e. independently of the characteristics of the system to which it is eventually fitted.

Moreover, the design of assembly 1 provides for quickly and easily converting a right-hand to a left-hand assembly, and vice versa, by simply rotating the two half-rings 86 substantially 90° about axis 7, switching elements 79, 80 inside seats 76, 78 and pins 73, 74 inside threaded portions 69, 70, and, depending on the length of the path of articles 2, shifting pins 32, 34 defining the mechanical limit stops inside respective holes 33, 35. Conversion is further simplified by elements 79, 80, pins 73, 74, and pins 32, 34 all being removable and replaceable using a straightforward Allen wrench. As for adjusting the position of the mechanical limit stops, this is simplified even further by pins 32 and 34 being accessible directly from the outside through a number of openings 98 formed in plate 42, and by pin 34 simply being fitted inside one of the two threaded holes 35, and pin 32 inside one of the four threaded holes 33.

The design of assembly 1 therefore provides for drastically reducing storage, enabling immediate supply by the maker, and enabling assemblies 1 to be produced regardless of the exact configuration of the system or even exact arrangement of assembly 1 within the system itself.

In addition to connecting and/or disconnecting device 3a relatively quickly, the design of assembly 1 also provides for continuous accurate adjustment of the position of gripping member 5 in relation to frame 3 and, in use, in relation to the supporting surface of article 2. Screw-nut screw device 93 in fact provides for both disconnecting device 3a from supporting frame 3, i.e. withdrawing device 3a gradually with practically no physical effort required, and for accurately adjusting the position of gripping member 5 working directly from the outside with an ordinary Allen wrench. Using a pair of screws 94, both cooperating with fixed frame 3, particularly simplifies reconnection of device 3a to frame 3 by greatly reducing the time required. That is, while one of screws 94 is used as a means for extracting device 3a, the other remains fixed and is used as a reference or locator, with a memory function, when reconnecting device 3a, which is thus automatically assembled in the previously set position.

Moreover, the design of assembly 1 and, in particular, the provision of quick-change device 61a, and the arrangement of screw-nut screw device 93 provide for achieving highly compact assemblies.

Finally, as compared with known assemblies, assembly 1 as described is relatively lightweight, thus further simplifying any handling operations.

Clearly, changes may be made to assembly 1 as described and illustrated herein without, however, departing from the scope of the present invention. In particular, actuators other than those described by way of example may be used; and quick-change device 61a may either be dispensed with or designed differently from that described by way of example, on condition that it provides for at least connecting the linear actuator to the compressed air source simultaneously with connection of device 3a to frame 3.

## Claims

1. An actuating assembly (1) for moving glass articles (2), the assembly (1) comprising a gripping member (5) for positively engaging an article (2) for transfer; a pneumatic actuator (6) for moving the gripping member (5), in use, to and from the article (2); and an angular actuator (4) for rotating the pneumatic actuator (6) about a rotation axis (7); circuit means (61) being provided for connecting said pneumatic actuator (6) to a source of compressed air regardless of the position of the pneumatic actuator (6) about said rotation axis (7); characterized in that said circuit means (61) comprise two pairs (83a)(83b) of passages (83) for the compressed air; first selecting means (65)(73)(74)(79)(80) for selectively connecting one of said two pairs (83a)(83b) of passages (83) to said source of compressed air; and second selecting means (86) for selectively connecting one of said two pairs (83a)(83b) of passages to the pneumatic actuator (6).

2. An assembly as claimed in Claim 1, characterized in that one of the passages (83) of one (83a) of said pairs (83a)(83b) of passages coincides with one of the passages (83) of the other (83b) of said pairs (83a)(83b) of passages.

3. An assembly as claimed in Claim 1 or 2, characterized in that said circuit means (61) comprise two first conduits (64)(66) connectable to said source of compressed air; and in that said first selecting means (65)(73)(74)(79)(80) comprise, for each of the first conduits (64)(66), an air conveying element selectable from a first (79) and a second (80) conveying element differing from and interchangeable with each other.

4. An assembly as claimed in Claim 3, characterized in that the first conveying element (79) comprises at least one airflow channel (81) permitting airflow in the respective said first conduit (64)(66).

5. An assembly as claimed in Claim 3 or 4, characterized in that the second conveying element (80) comprises an inlet/outlet channel (83) permitting airflow in and out of the respective first conduit (64)(66) and defining one of the passages (83) in a respective said pair (83a)(83b) of passages.

6. An assembly as claimed in Claim 3, characterized in that said first selecting means (65)(73)(74)(79)(80) also comprise a second conduit (65) communicating with both said first conduits (64)(66) and with one of the passages (83) in a respective said pair (83a)(83b) of passages; shutter means (74) being fittable to said conduits (64)(65)(66) to isolate one of said first conduits (64)(66) in fluidtight manner from said second conduit (65).

7. An assembly as claimed in Claims 5 and 6 when dependent on Claim 2, characterized by comprising a further said second conveying element (80) extending through said second conduit (65); the inlet/outlet channel (83) of said further second conveying element (80) defining said compressed air passage (83) common to said two pairs (83a)(83b) of passages (83).

8. An assembly as claimed in Claim 6 or 7, characterized in that said conduits (64)(65)(66) are formed in an air distribution plate (42), and present respective axes (67) intersecting one another in two distinct points (P1)(P2); said shutter means comprising a threaded body (74) engaging one or other of two threaded holes (69)(70) formed in said plate (42) and extending through said points (P1)(P2) of intersection of the axes (67) of the conduits (64)(65)(66).

9. An assembly as claimed in Claim 8, characterized in that said threaded holes (69)(70) both communicate externally; and plugging means (73) are associated with said threaded holes (69)(70) to prevent airflow to the outside.

10. An assembly as claimed in any one of the foregoing Claims, characterized in that said second selecting means (86) comprise two chambers (92) separated from each other in fluidtight manner, communicating permanently with said pneumatic actuator (6), and having respective air inlet/outlet openings (88); said second selecting means (86) also comprising actuating means (86) for moving said chambers (92) and connecting said inlet/outlet openings (88) to the passages (83) of one or the other of said two pairs (83a)(83b) of air passages (83).

11. An assembly as claimed in Claim 10, characterized by comprising an air distribution plate (42); and in that said actuating means (86) at least partly define said chambers (92) and are both rotatable in relation to the distribution plate (42) about an axis parallel to said rotation axis (7).

12. An assembly as claimed in Claim 11, characterized in that said actuating means comprise, for each of said chambers (92), a semiannular body (86) partially defining a respective chamber (92) and through which the inlet/outlet opening (88) of the respective chamber (92) is formed; the assembly (1) also comprising a movable supporting body (43) for supporting said pneumatic actuator (6); and said semiannular bodies (86) mating in sliding and fluidtight manner with said movable supporting body (43) to define said chambers (92).

13. An assembly as claimed in any one of the foregoing Claims, characterized by also comprising a fixed body (23) fixed in relation to said pneumatic actuator (6); and first (32) and second (34) mechanical limit stops associated with said fixed body (23) and for angularly arresting said gripping member (5); adjusting means (32,33)(34,35) being provided to adjust, from the outside, the position of said mechanical limit stops (32)(34) in relation to said fixed body (23).

14. An assembly as claimed in Claim 13, characterized in that said adjusting means (32,33)(34,35) comprise a number of threaded holes (33)(35) formed in said fixed body (23); said mechanical limit stops being defined by respective pins (32)(34), each having at least one threaded portion for selectively and positively engaging a respective said threaded hole (33)(35).

15. An assembly as claimed in any one of the foregoing Claims, characterized by comprising supporting means (3) for supporting said actuators (4)(6) and fittable integrally to a fixed structure; and adjusting means (93) adjustable from the outside to continuously adjust the position of said gripping member (5) in relation to said supporting means (3) and in a direction parallel to said rotation axis (7).

16. An assembly as claimed in Claim 15, characterized in that said adjusting means (93) comprise a screw-nut screw adjusting device (19,94).

## Patentansprüche

1. Bewegungsanlage (1) zum Bewegen von Glasgegenständen (2), wobei die Anlage (1) ein Greifelement (5) zum Festhalten eines Gegenstands (2) zu dessen Übertrag; eine pneumatische Bewegungsvorrichtung (6) zum Bewegen des Greifelements (5) bei Verwendung zu und von dem Gegenstand (2) weg; und eine Drehbewegungsvorrichtung (4) zum Drehen der pneumatischen Bewegungsvorrichtung (6) um eine Drehachse (7); eine Leitungsvorrichtung (61) aufweist, die zum Anschließen der pneumatischen Bewegungsvorrichtung (6) an eine Druckluftquelle unabhängig von der Position der pneumatischen Bewegungsvorrichtung (6) um die Drehachse (7) vorgesehen ist; dadurch gekennzeichnet, dass die Leitungsvorrichtung (61) zwei Paare (83a, 83b) von Durchgängen (83) für die Druckluft; eine erste Auswahlvorrichtung (65, 73, 74, 79, 80) zum wahlweisen Anschließen eines der zwei Paare (83a, 83b) der Durchgänge (83) an die Druckluftquelle; und eine zweite Auswahlvorrichtung (86) zum wahlweisen Anschließen eines der beiden Paare (83a, 83b) der Durchgänge an die pneumatische Bewegungsvorrichtung (6) aufweist.

2. Anlage nach Anspruch 1, dadurch gekennzeichnet, dass einer der Durchgänge (83) von einem (83a) der Paare (83a, 83b) der Durchgänge mit einem der Durchgänge (83) des anderen (83b) Paars der Paare (83a, 83b) der Durchgänge zusammenfällt.

3. Anlage nach Anspruch 1 oder 2, dadurch gekennzeichnet, dass die Leitungsvorrichtung (61) zwei erste Leitungen (64, 66) aufweist, die an die Druckluftquelle anschließbar sind und dass die erste Auswahlvorrichtung (65, 73, 74, 79, 80) für jede der ersten Leitungen (64, 66) ein Luftzuführelement aufweist, das aus einem ersten (79) und einem zweiten (80) Zuführelement ausgewählt werden kann, die sich voneinander unterscheiden und einander austauschbar sind.

4. Anlage nach Anspruch 3, dadurch gekennzeichnet, dass das erste Zuführelement (79) mindestens einen Luftströmungskanal (81) aufweist, der eine Luftströmung in die entsprechende erste Leitung (64, 66) ermöglicht.

5. Anlage nach Anspruch 3 oder 4, dadurch gekennzeichnet, dass das zweite Zuführelement (80) einen Einlass/Auslasskanal (81) aufweist, der eine Luftströmung in und aus der entsprechenden ersten Leitung (64, 66) erlaubt und einen der Durchgänge (83) in einem entsprechenden Paar (83a, 83b) der Durchgänge definiert.

6. Anlage nach Anspruch 3, dadurch gekennzeichnet, dass die erste Auswahlvorrichtung (65, 73, 74, 79, 80) auch eine zweite Leitung (65) aufweist, die mit sowohl den ersten Leitungen (64, 66) als auch mit einem der Durchgänge (83) in einem entsprechenden Paar (83a, 83b) der Durchgänge in Verbindung steht; eine Verschlussvorrichtung (74), die an den Leitungen (64, 65, 66) einpassbar ist, um eine der ersten Leitungen (64, 66) in fluiddichter Weise von der zweiten Leitung (65) zu isolieren.

7. Anlage nach Ansprüchen 5 und 6, bei Abhängigkeit von Anspruch 2, dadurch gekennzeichnet, dass sie überdies ein zweites Zuführelement (80) aufweist, das sich durch die zweite Leitung (65) erstreckt; der Einlass/Auslasskanal (83) des weiteren zweiten Zuführelements (80) definiert den Druckluftdurchgang (83) zusammen mit den zwei Paaren (83a, 83b) der Durchgänge (83).

8. Anlage nach Anspruch 6 oder 7, dadurch gekennzeichnet, dass die Leitungen (64, 65, 66) in einer Luftverteilerplatte (42) ausgebildet sind und sich vorliegende entsprechende Achsen (67) einander in zwei bestimmten Punkten (P1, P2) schneiden; die Verschlussvorrichtung einen Gewindekörper (74) aufweist, der in das eine oder das andere der beiden Gewindelöcher (69, 70) eingreift, die in der Platte (42) ausgebildet sind und sich durch die Punkte (P1, P2) des Schnittpunkts der Achsen (67) der Leitungen (64, 65, 66) erstrecken.

9. Anlage nach Anspruch 8, dadurch gekennzeichnet, dass beide Gewindelöcher (69, 70) extern in Verbindung stehen; und eine Stopfenvorrichtung mit den Gewindelöchern (69, 70) verbunden sind, um eine Luftströmung nach außen zu verhindern.

10. Anlage nach einem der vorangehenden Ansprüche, dadurch gekennzeichnet, dass die zweite Auswahlvorrichtung (86) zwei voneinander in dichter Weise getrennte Kammern (92) aufweist, die permanent mit der pneumatischen Bewegungsvorrichtung (6) in Verbindung stehen und entsprechende Lufteinlass/Auslassöffnungen (88) haben; die zweite Auswahlvorrichtung (86) weist auch eine Bewegungsvorrichtung (86) zum Bewegen der Kammern (92) auf, die die Einlass-/Auslassöffnungen (88) mit den Durchgängen (83) von dem einen oder dem anderen der beiden Paare (83a, 83b) der Luftdurchgänge (83) verbinden.

11. Anlage nach Anspruch 10, dadurch gekennzeichnet, dass sie eine Luftverteilerplatte (42) aufweist; und dass die Bewegungsvorrichtung (86) zumindest teilweise die Kammern (92) definiert, die beide relativ zur Verteilerplatte (42) um eine zur Rotationsachse (7) parallele Achse gedreht werden können.

12. Anlage nach Anspruch 11, dadurch gekennzeichnet, dass die Bewegungsvorrichtung für jede der Kammern (92) einen halbringförmigen Körper (86) aufweist, der teilweise eine entsprechende Kammer (92) definiert und durch den die Einlass-/Auslassöffnung (88) der entsprechenden Kammer (92) gebildet ist; die Anlage (1) weist auch einen bewegbaren Tragkörper (43) zum Tragen der pneumatischen Bewegungsvorrichtung (6) auf; und die halbringförmigen Körper (86) paaren sich in gleitender und fluiddichter Weise mit dem bewegbaren Tragkörper (43) um die Kammern (92) zu definieren.

13. Anlage nach einem der vorangehenden Ansprüche, dadurch gekennzeichnet, dass sie auch einen feststehenden Körper (23) aufweist, der mit bezug auf die pneumatische Bewegungsvorrichtung (6) feststeht; und einen ersten (32) und einen zweiten (34) mechanischen Begrenzungsanschlag, der mit dem feststehenden Körper (23) verbunden ist und das Greifelement (5) im Drehwinkel begrenzt; Einstellvorrichtungen (32, 33, 34, 35) zum Einstellen der Position der mechanischen Begrenzungsanschläge (32, 34) in Relation zu dem feststehenden Körper (23) von außen.

14. Anlage nach Anspruch 13, dadurch gekennzeichnet, dass die Einstellvorrichtungen (32, 33, 34, 35) eine Anzahl von Gewindelöchern (33, 35) aufweisen, die in dem feststehenden Körper (23) ausgebildet sind; die mechanischen Begrenzungsanschläge sind durch entsprechende Stifte (32, 34) definiert, die jeweils mindestens einen Gewindeabschnitt zum wahlweisen und sicheren Festhalten eines entsprechenden Gewindelochs (33, 35) haben.

15. Anlage nach einem der vorangehenden Ansprüche, dadurch gekennzeichnet, dass sie eine Trägervorrichtung (3) zum Tragen der Bewegungsvorrichtungen (4, 6), die integral an einer feststehenden Struktur anbringbar sind; und eine von außen einstellbare Einstellvorrichtung (93) aufweist, um die Position des Greifelements (5) relativ zur Trägervorrichtung (3) und in einer Richtung parallel zur Rotationsachse (7) einzustellen.

16. Anlage nach Anspruch 15, dadurch gekennzeichnet, dass die Einstellvorrichtung (93) eine Schrauben-Mutter Schraubeneinstellvorrichtung (19, 94) aufweist.

## Revendications

1. Ensemble d'actionnement (1) pour déplacer des articles en verre (2), cet ensemble (1) comprenant un élément de préhension (5) destiné à venir en prise positivement avec un article (2) pour le transférer, un actionneur pneumatique (6) destiné, en service, à amener l'élément de préhension (5) à l'article (2) et l'en éloigner, et un actionneur angulaire (4) destiné à faire tourner l'actionneur pneumatique (6) autour d'un axe de rotation (7), des moyens de formation de circuit (61) étant prévus pour relier l'actionneur pneumatique (6) à une source d'air comprimé quelle que soit la position de celui-ci autour de l'axe de rotation (7), caractérisé par le fait que les moyens de formation de circuit (61) comprennent deux paires (83a)(83b) de passages (83) pour l'air comprimé, des premiers moyens de sélection (65)(73)(74)(79)(80) pour relier sélectivement une des deux paires (83a)(83b) de passages (83) à la source d'air comprimé et des deuxièmes moyens de sélection (86) pour relier sélectivement une des deux paires (83a)(83b) de passages à l'actionneur pneumatique (6).

2. Ensemble selon la revendication 1, caractérisé par le fait qu'un des passages (83) d'une (83a) des paires (83a)(83b) de passages coïncide avec un des passages (83) de l'autre (83b) des paires (83a, 83b) de passages.

3. Ensemble selon l'une des revendications 1 et 2, caractérisé par le fait que les moyens de formation de circuit (61) comprennent deux premiers conduits (64)(66) pouvant être reliés à la source d'air comprimé, et que les premiers moyens de sélection (65)(73)(74)(79)(80) comprennent pour chacun des premiers conduits (64)(66) un élément de transport d'air pouvant être choisi entre un premier élément de transport (79) et un deuxième (80) qui diffèrent l'un de l'autre et sont interchangeables entre eux.

4. Ensemble selon la revendication 3, caractérisé par le fait que le premier élément de transport (79) comprend au moins un canal d'écoulement d'air (81) permettant l'écoulement d'air dans le premier conduit respectif (64)(66).

5. Ensemble selon l'une des revendications 3 et 4, caractérisé par le fait que le deuxième élément de transport (80) comprend un canal d'entrée-sortie (83) permettant l'écoulement d'air dans le premier conduit respectif (64)(66) et hors de celui-ci et formant un des passages (83) d'une paire respective (83a)(83b) de passages.

6. Ensemble selon la revendication 3, caractérisé par le fait que les premiers moyens de sélection (65)(73)(74)(79)(80) comprennent aussi un deuxième conduit (65) communiquant avec les deux premiers conduits (64)(66) et avec un des passages (83) d'une paire respective (83a)(83b) de passages, des moyens d'obturation (74) pouvant être montés sur les conduits (64)(65)(66) pour isoler de manière étanche aux fluides un des premiers conduits (64)(66) du deuxième conduit (65).

7. Ensemble selon les revendications 5 et 6 lorsqu'elles dépendent de la revendication 2, caractérisé par le fait qu'il comprend un autre deuxième élément de transport (80) traversant le deuxième conduit (65), le canal d'entrée-sortie (83) de cet autre deuxième élément de transport (80) formant le passage d'air comprimé (83) commun aux deux paires (83a)(83b) de passages (83).

8. Ensemble selon l'une des revendications 6 et 7, caractérisé par le fait que les conduits (64)(65)(66) sont formés dans une plaque de distribution d'air (42) et présentent des axes respectifs (67) qui se coupent en deux points distincts (P1)(P2), les moyens d'obturation comprenant un corps fileté (74) s'engageant dans l'un ou l'autre de deux trous taraudés (69)(70) formés dans la plaque (42) et passant par les points (P1)(P2) d'intersection des axes (67) des conduits (64)(65)(66).

9. Ensemble selon la revendication 8, caractérisé par le fait que les trous taraudés (69)(70) communiquent tous les deux extérieurement, et des moyens de bouchage (73) sont associés aux trous taraudés (69)(70) pour empêcher l'écoulement d'air à l'extérieur.

10. Ensemble selon l'une des revendications précédentes, caractérisé par le fait que les deuxièmes moyens de sélection (86) comprennent deux chambres (92) séparées l'une de l'autre de manière étanche aux fluides, communiquant en permanence avec l'actionneur pneumatique (6) et ayant des orifices d'entrée-sortie d'air respectifs (88), les deuxièmes moyens de sélection (86) comprenant aussi des moyens d'actionnement (86) pour déplacer les chambres (92) et relier les orifices d'entrée-sortie (88) aux passages (83) de l'une ou l'autre des deux paires (83a)(83b) de passages d'air (83).

11. Ensemble selon la revendication 10, caractérisé par le fait qu'il comprend une plaque de distribution d'air (42) et que les moyens d'actionnement (86) délimitent au moins partiellement les chambres (92) et peuvent tous les deux tourner par rapport à la plaque de distribution (42) autour d'un axe parallèle à l'axe de rotation (7).

12. Ensemble selon la revendication 11, caractérisé par le fait que les moyens d'actionnement comprennent pour chacune des chambres (92) un corps semi-annulaire (86) qui délimite partiellement une chambre respective (92) et dans lequel est formé l'orifice d'entrée-sortie (88) de la chambre respective (92), l'ensemble (1) comprenant aussi un corps support mobile (43) destiné à supporter l'actionneur pneumatique (6), et les corps semi-annulaires (86) s'accouplant de manière coulissante et étanche aux fluides au corps support mobile (43) pour délimiter les chambres (92).

13. Ensemble selon l'une des revendications précédentes, caractérisé par le fait qu'il comprend aussi un corps fixe (23) fixe par rapport à l'actionneur pneumatique (6) et des première (32) et deuxième (34) butées mécaniques de fin de course associées au corps fixe (23) et destinées à arrêter angulairement l'élément de préhension (5), des moyens de réglage (32, 33)(34, 35) étant prévus pour le réglage de l'extérieur de la position des butées mécaniques de fin de course (32)(34) par rapport au corps fixe (23).

14. Ensemble selon la revendication 13, caractérisé par le fait que les moyens de réglage (32, 33)(34, 35) comprennent un certain nombre de trous taraudés (33)(35) formés dans le corps fixe (23), les butées mécaniques de fin de course étant formées par des goujons respectifs (32)(34) ayant chacun une partie filetée destinée à être engagée sélectivement et positivement dans un trou taraudé respectif (33)(35).

15. Ensemble selon l'une des revendications précédentes, caractérisé par le fait qu'il comprend un moyen de support (3) destiné à supporter les actionneurs (4)(6) et pouvant être monté sur une structure fixe de façon à faire corps avec celle-ci, et des moyens de réglage (93) réglables de l'extérieur pour le réglage progressif de la position de l'élément de préhension (5) par rapport au moyen de support (3) et dans une direction parallèle à l'axe de rotation (7).

16. Ensemble selon la revendication 15, caractérisé par le fait que les moyens de réglage (93) comprennent un dispositif de réglage à vis et écrou (19, 94).
